(19)

Europäisches Patentamt

European Patent Office

Office européen des brevets

(11) **EP 4 408 073 A1**

(12) **EUROPEAN PATENT APPLICATION**
published in accordance with Art. 153(4) EPC

(43) Date of publication:
**31.07.2024  Bulletin 2024/31**

(21) Application number: **22874389.4**

(22) Date of filing: **27.07.2022**

(51) International Patent Classification (IPC):
*H04W 36/24* (2009.01)          *H04W 28/00* (2009.01)
*H04W 64/00* (2009.01)

(52) Cooperative Patent Classification (CPC):
**H04W 36/24; H04W 28/00; H04W 36/302;**
**H04W 64/00; H04W 88/06;** H04W 36/326;
Y02D 30/70

(86) International application number:
**PCT/CN2022/108332**

(87) International publication number:
**WO 2023/050993 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **29.09.2021  CN 202111154844**

(71) Applicant: **ZTE Corporation**
**Shenzhen, Guangdong 518057 (CN)**

(72) Inventor: **SHEN, Shaowu**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **TERMINAL COMMUNICATION MODE ADJUSTMENT METHOD AND APPARATUS, TERMINAL AND STORAGE MEDIUM**

(57)    A terminal communication mode adjustment method and apparatus, a terminal and a storage medium. The terminal communication mode adjustment method comprises: acquiring the running state of a terminal, the running state comprising one among running scenarios, network performance and running speed or any combination thereof; matching, according to the running state, a corresponding adjustment means, wherein the adjustment means corresponds to different running states, N adjustment means are preset, and N is an integer greater than 1; and adjusting the communication mode of the terminal according to the adjustment means.

FIG. 1

## Description

### CROSS-REFERENCE TO RELATED APPLICATION

This application is filed on the basis of Chinese patent application No. 202111154844.8 filed September 29, 2021, and claims priority to the Chinese patent application, the entire contents of which are incorporated herein by reference.

### TECHNICAL FIELD

Embodiments of the present disclosure relate to the field of communication transmission, and more particularly, to a method and apparatus for adjusting a communication mode of a terminal device, a terminal device, and a storage medium.

### BACKGROUND

With the advancement of 5th Generation (5G) terminal devices, particularly the advancement and evolution of Multiple-in Multiple-out (MIMO) 5G terminal devices, there is an increase in the number of antennas in these devices, and the communication frequency is getting higher. The center frequency of sub-6G Time Division Duplexing (TDD) in New Radio (NR), such as N77, N78, and N79, is about 3.3 GHz to 5 GHz, and the central frequencies of millimeter wave are 28 GHz and about 37 GHz to 40 GHz. In addition, NR can operate in two network modes: Non-Standalone Networking (NSA) and Standalone Networking (SA). The NSA needs to rely on Long Term Evolution (LTE) base stations as anchors, and has certain requirements on anchor signal quality.

However, since terminal devices are used in high-speed mobile scenarios, the trend towards a greater number of antennas and higher communication frequencies in the development of terminal devices accentuates the frequency offsets of signals received and transmitted by the device. This, in turn, leads to more frequent cell handovers, which impacts the communication performance of the terminal devices.

### SUMMARY

Embodiments of the present disclosure are to provide a method and apparatus for adjusting a communication mode of a terminal device, a terminal device, and a storage medium, to reduce the impact of external factors during high-speed movement of the terminal device, thereby ensuring the communication performance and improving user experience.

An embodiment of the present disclosure provides a method for adjusting a communication mode of a terminal device, including: acquiring a running state of the terminal device, where the running state includes one or any combination of a running scenario, network performance, or a running speed; determining an adjustment mode matching the running state, where N adjustment modes corresponding to different running states are preset, and N is an integer greater than 1; and adjusting the communication mode of the terminal device according to the adjustment mode.

An embodiment of the present disclosure provides an apparatus for adjusting a communication mode of a terminal device, including: an acquisition unit, configured for acquiring a running state of the terminal device, where the running state includes one or any combination of a running scenario, network performance, or a running speed; a matching unit, configured for determining an adjustment mode matching the running state, where N adjustment modes corresponding to different running states are preset, and N is an integer greater than 1; and an execution unit, configured for adjusting the communication mode of the terminal device according to the adjustment mode.

An embodiment of the present disclosure provides a terminal device, including: at least one processor; and a memory communicatively connected to the at least one processor, where the memory stores an instruction executable by the at least one processor which, when executed by the at least one processor, causes the at least one processor to implement the method for adjusting a communication mode of a terminal device.

An embodiment of the present disclosure provides a computer-readable storage medium, storing a computer program which, when executed by a processor, causes the processor to implement the method for adjusting a communication mode of a terminal device.

### BRIEF DESCRIPTION OF DRAWINGS

FIG. 1 is a flowchart of a method for adjusting a communication mode of a terminal device according to an embodiment of the present disclosure;

FIG. 2 is a schematic diagram one showing a process of a method for adjusting a communication mode of a terminal device according to an embodiment of the present disclosure;

FIG. 3 is a schematic diagram two showing a process of a method for adjusting a communication mode of a terminal device according to an embodiment of the present disclosure;

FIG. 4 is a schematic diagram three showing a process of a method for adjusting a communication mode of a terminal device according to an embodiment of the present disclosure;

FIG. 5 is a schematic diagram four showing a process of a method for adjusting a communication mode of a terminal device according to an embodiment of the present disclosure;

FIG. 6 is a schematic diagram five showing a process of a method for adjusting a communication mode of a terminal device according to an embodiment of the present disclosure;

FIG. 7 is a schematic diagram six showing a process of a method for adjusting a communication mode of a terminal device according to an embodiment of the present disclosure;

FIG. 8 is a schematic diagram seven showing a process of a method for adjusting a communication mode of a terminal device according to an embodiment of the present disclosure;

FIG. 9 is a schematic diagram eight showing a process of a method for adjusting a communication mode of a terminal device according to an embodiment of the present disclosure;

FIG. 10 is a schematic diagram nine showing a process of a method for adjusting a communication mode of a terminal device according to an embodiment of the present disclosure;

FIG. 11 is a schematic diagram ten showing a process of a method for adjusting a communication mode of a terminal device according to an embodiment of the present disclosure;

FIG. 12 is a schematic diagram of an apparatus for adjusting a communication mode of a terminal device according to an embodiment of the present disclosure; and

FIG. 13 is a schematic diagram of a terminal device according to an embodiment of the present disclosure.

## DETAILED DESCRIPTION

To make the objectives, technical schemes and advantages of the embodiments of the present disclosure clear, the embodiments of the present disclosure will be described in detail below in conjunction with the drawings. However, it may be understood by those having ordinary skills in the art that although various embodiments of the present disclosure provide many technical details to make readers better understand the present disclosure, the technical schemes claimed in the present disclosure can be realized even without these technical details and various variations and modifications made based on the following embodiments. The following embodiments are divided for convenience of description and are not intended to constitute any limitation on the specific implementations of the present disclosure. The embodiments may be combined or used as references for each other where there are no contradictions.

The terms "first" and "second" are used in the embodiments of the present disclosure for purposes of description, and are not intended to indicate or imply relative importance or implicitly point out the number of the indicated technical feature. Therefore, the features defined by "first" and "second" may explicitly or implicitly include one or more features. In the description of the present disclosure, the terms "include", "have", and any variant thereof are intended to cover a non-exclusive inclusion. For example, a system, product, or device that includes a series of components or units is not limited to the listed components or units, and instead, further optionally includes a component or unit that is not listed, or further optionally includes another component or unit that is intrinsic to the system, product, or device. In the description of the present disclosure, the terms "multiple" and "plurality of' mean two or more, e.g., two or three, unless otherwise particularly defined.

With the development of 5G terminal devices, the number of antennas in terminal devices is increasing, and the communication frequency is getting higher. People usually use terminal devices on mobile tools such as high-speed railways. With the development of high-speed railways, the high-speed railways are designed to run at a speed of 250 Km/h or above, the nominal running speed is 300 Km/h to 450 Km/h, and the top speed can reach 605 Km/h. However, high-speed movement will bring various impact on 5G communication. A rotatable antenna on the train may be used to improve the communication quality between the base station and the train. However, the external rotatable antenna on the train has the problems of unsatisfactory maneuverability and certain delay in adjustment. Alternatively, a narrow-band Global System for Mobile Communications - Railway (GSM-R) mode for high-speed railways may be used to optimize the throughput and delay of high-speed railways. However, the high-speed railway channel model and dedicated network bandwidth based on the GSM-R (900 MHz) limit the throughput performance of users, and cannot support high-traffic multimedia services. Alternatively, the high-speed railway 5G dedicated network may be sliced in a customized manner in different scenarios. However, the SG-dedicated slicing modules cannot solve the problems of obstacle blocking, fast cell handover, and frequency offset in high-speed movement. Alternatively, a shared hotspot device on the high-speed railway may be used to convert signals from the base station into Wi-Fi hotspot signals through a conversion device such as Customer Premise Equipment (CPE) for use by users. However, the throughput of the hotspot sharing mode for high-speed railways is limited, the hotspot quality is restricted by the communication quality between the train and the base station, and a certain delay exists. That is to say, the above schemes cannot eliminate the impact of external factors during the high-speed movement of MIMO antenna terminal devices to ensure the communication quality.

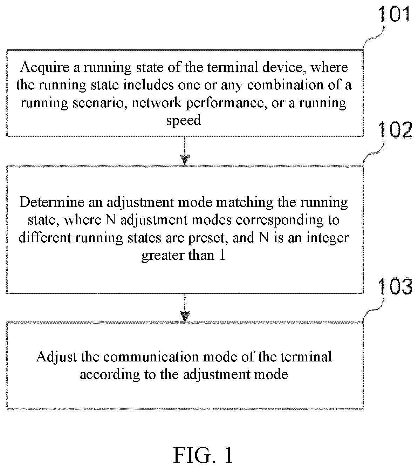

An embodiment of the present disclosure relates to a method for adjusting a communication mode of a terminal device. A detailed process of the method is shown in FIG. 1. This embodiment can be applied to 5G terminal devices, 5G terminal device products, CPEs, as well as all 5G terminal device products in high-speed scenarios under 2G/3G/4G/5G standards in NSA and SA modes. For example, the terminal device is in a high-speed railway scenario.

In the operation of 101, a running state of the terminal device is acquired, where the running state includes one or any combination of a running scenario, network performance, or a running speed.

In the operation of 102, an adjustment mode matching the running state is determined, where N adjustment modes corresponding to different running states are preset, and N is an integer greater than 1.

In the operation of 103, the communication mode of the terminal device is adjusted according to the adjustment mode.

In this embodiment, a method for adjusting a communication mode of a terminal device is provided. N adjustment modes corresponding to different running states are preset, where N is an integer not less than 2. A running state of the terminal device is acquired, a parameter of the running state of the terminal device is identified, the adjustment mode matching the running state is determined, and the communication mode of the terminal device is adjusted according to the determined adjustment mode. The matching adjustment mode is invoked to actively improve the communication function of the terminal device in different running scenarios, at different running speeds, and under different network performance, thereby improving the communication quality of the terminal device to improve user experience.

Implementation details of the data method for adjusting a communication mode of a terminal device in this embodiment will be described below and the following contents are provided only for convenience of understanding and are not necessary for implementing the present scheme.

At the operation of 101, a running state of the terminal device is acquired, where the running state includes one or any combination of a running scenario, network performance, or a running speed. That is, a current parameter of the running state of the terminal device is acquired, and the communication mode of the terminal device is correspondingly adjusted based on the current parameter of the terminal device.

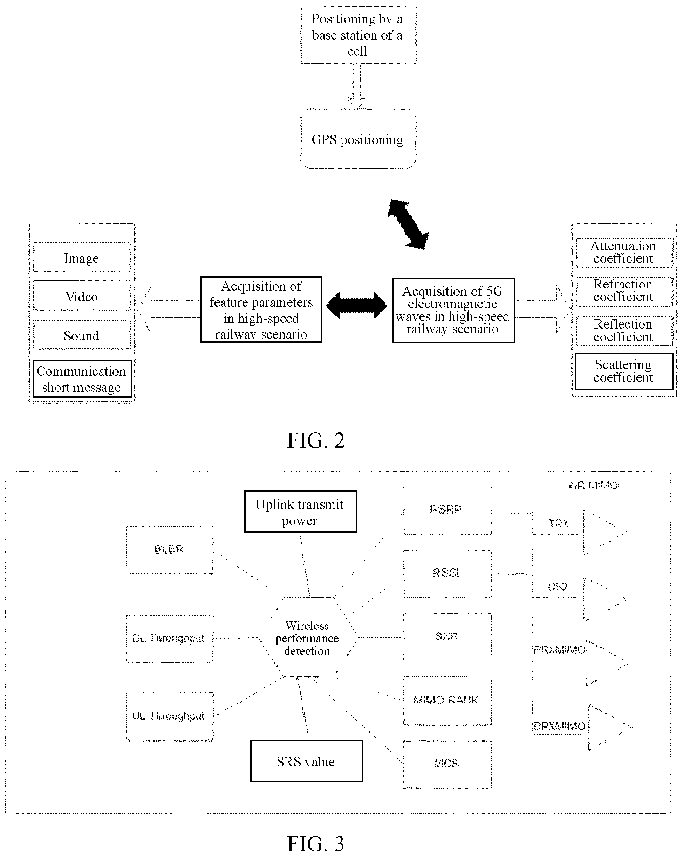

In an example, when the running state includes the running scenario, acquiring a running state of the terminal device includes one or any combination of: acquiring location information of the terminal device according to a base station of a cell and a Global Positioning System (GPS), and acquiring the running scenario of the terminal device according to the location information; acquiring an environmental feature parameter using a camera of the terminal device, and acquiring the running scenario of the terminal device according to the environmental feature parameter; and detecting a radiation characteristic of a surrounding environment of the terminal device through an electromagnetic wave, and acquiring the running scenario of the terminal device according to the radiation characteristic, where the radiation characteristic includes direct irradiance, reflection, scattering, and/or diffraction characteristics. For example, first, the base station of the cell and the GPS implement preliminary positioning. Next, the camera acquires feature parameters of different positions of a mobile tool carrying the terminal device. Finally, direct irradiance, reflection, scattering, and/or diffraction characteristics of feature objects in and around the mobile tool are detected through electromagnetic waves such as 5G electromagnetic waves, as shown in FIG. 2. The mobile tool carrying the terminal device may be a high-speed railway, a vehicle on an expressway, etc.

In an example, high-speed scenarios are classified into several categories: intra-station, intra-vehicle, and out-of-station scenarios. The intra-station scenarios are further classified into concrete structure, tempered glass, metal frame, steel bracket, brick wall, etc. The intra-vehicle scenarios are further classified into metal vehicle body, window glass, mobile vehicle door, etc. In the process of communication with the base station, electromagnetic waves (SUB6G or mmW millimeter wave) need to penetrate the materials in the above scenarios, and experience path loss and attenuation after passing through the materials, leading to deteriorated communication quality of the terminal device. Similarly, because different materials have different dielectric constants, attenuation coefficients, as well as scattering and diffraction coefficients, parameters are acquired by extracting the above features, the acquired parameters are input into a parameter model, and the specific high-speed scenario is determined according to an output of the parameter model. For the parameter model, when the acquired parameters fall within the ranges of model parameter thresholds, the specific high-speed scenario corresponding to the wireless network signal environment in which the terminal device is currently located can be determined. In another example, the high-speed scenarios may be classified into four parts: waiting hall, station exit, midway station, and traveling. The waiting hall and station exit scenarios may be further classified into three types: heavy traffic, medium traffic, and light traffic. The midway station scenarios may be further classified into three types: intra-station, out-of-station, intra-carriage, and out-of-carriage (and corresponding moving or static states). Traveling of the mobile tool carrying the terminal device may be classified into low-speed, medium-speed, and high-speed scenarios. The out-of-station scenarios include scenarios along the way traveled by the mobile tool, such as mountains, forests, buildings, rivers, tunnels, deep valleys, elevated roads, stations, suburbs, villages, plains, urban areas, etc.

In the process of acquiring the running scenario, the current high-speed scenario can be directly determined through scenario identification without relying on the GPS. In addition, in addition to the above electromagnetic wave detection method, the scenario identification method may further include scenario identification based on a front or rear camera or earphones of the terminal device. For example, the front or rear camera or earphones is used to acquire pictures, images, sounds, communication short messages (SMS messages, chat records, etc.) of the scenario and environment where the terminal device is located, and the acquired data is filtered and classified and then matched against a parameter model database to determine the high-speed scenario where the terminal device is currently located.

In an example, when it is detected that the terminal device is currently in a high-speed moving state and the network performance cannot meet a quality threshold which is preset or specified by the user, adaptive optimization adjustment needs to be performed. In this case, current network quality of the terminal device needs to be acquired in real time. The network quality includes an overall signal receiving and sending status of NR and a received signal status of each MIMO path. The overall signal receiving and sending status may include: uplink power, downlink Reference Signal Receiving Power (RSRP) value, Received Signal Strength Indication (RSSI) value, Signal-to-noise ratio (SNR) value, MIMO Rank (number of streams), Modulation and Coding Scheme (MCS) modulation mode, MCS order, etc., or a wireless performance parameter such as uplink or downlink throughput, bit error rate, etc. The received signal status of each MIMO path may include an RSRP/RSSI value or a Sounding Reference Signal (SRS) value of each path. The acquired parameters may be as shown in FIG. 3. In FIG. 3, DRX represents a diversity receive component, and TRX represents a transceiver component.

In an example, when the running state includes the running speed, acquiring a running state of the terminal device includes one or any combination of: acquiring the running speed of the terminal device according to a positioning distance acquired by a GPS and a positioning time difference corresponding to the positioning distance; or acquiring the running speed of the terminal device according to an SRS feedback time difference and an angle difference corresponding to the SRS feedback time difference. In some cases, the running speed of the mobile tool carrying the terminal device is known. Although the terminal device is used on the mobile tool, the running speed of the terminal device is unknown. In such cases, the running speed of the terminal device may be acquired in either of the following two manners.

Manner One: A location of the terminal device is positioned twice through the GPS. A difference between the two locations is calculated as a positioning distance. An average running speed of the terminal device can be obtained by dividing the positioning distance by a time difference between the two positioning operations. When the time interval between the two positioning operations is short enough, the acquired running speed may be regarded as a current instantaneous running speed. For example, the positioning distance of the terminal device is defined as S meters, and the positioning time difference corresponding to the positioning distance is defined as T. The running speed V of the terminal device is S/T. The speed is further corrected using an acceleration or gyroscope sensor built in the terminal device. For example, when the train where the terminal device is located is moving, a relative speed is generated. In this case, a sensor module built in the terminal device needs to be invoked to correct the running speed.

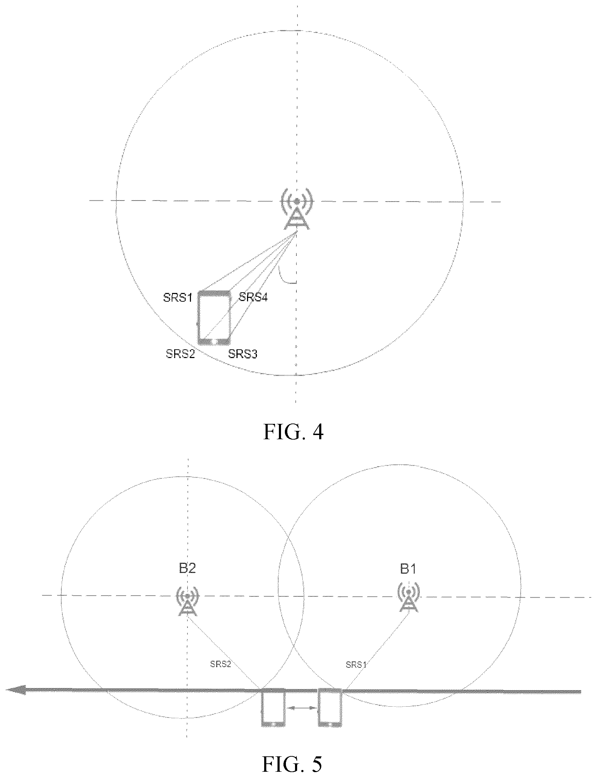

Manner Two: The speed is measured based on a time difference reported and fed back by an SRS from the terminal device and an angle difference corresponding to the time difference. As shown in FIG. 4, the terminal device sends SRSs to a base station along the way of the mobile tool carrying the terminal device in real time and equal time slot. The base station feeds back a scheduling signal to the terminal device after receiving the SRSs. The terminal device transmits four SRSs, namely, SRS1, SRS2, SRS3, and SRS4, to the base station through four NR antennas. The base station detects the SRSs from the terminal device, determines angle information between the terminal device and the base station, calculates two locations A and B that the terminal device travels through according to the angle information, and then calculates the speed of the terminal device by dividing a distance AB between the two locations by the travel time of the terminal device. In addition, Manner Two is suitable for use in cases where the terminal device moves within one base station cell. If the terminal device moves crosses cells, the calculation process is as follows. The terminal device acquires SRS feedback information from a first cell B1, then acquires SRS feedback information from a second cell B2, and calculates a time difference between the two pieces of SRS feedback information. Location information such as the longitude and latitude of the two cells B1 and B2 is public basic information and can be pre-stored in a parameter storage module of the terminal device. The current speed of the terminal device can be calculated according to the distance and angle between the two cells and the time difference. The movement of the terminal device between the cells B1 and B2 is shown in FIG. 5.

At the operation of 102, an adjustment mode matching the running state is determined, where N adjustment modes corresponding to different running states are preset, and N is an integer greater than 1. That is to say, the preset running state that a real-time feature of the terminal device satisfies is detected, and then the adjustment mode corresponding to the determined running state is executed.

In an example, the adjustment mode includes one or any combination of: an uplink and downlink adjustment mode, a frequency offset compensation mode, a SRS movement estimation mode, or a path network matching mode. The adjustment modes can be respectively used to deal with different problems that will occur in the movement process of terminal devices to ensure the communication quality of the terminal device.

In an example, determining an adjustment mode matching the running state includes one or any combination of: selecting the uplink and downlink adjustment mode when a signal strength in the network performance in the running state is lower than a preset signal strength threshold; selecting the frequency offset compensation mode when the running speed in the running state is higher than a preset speed; selecting the SRS movement estimation mode when a throughput in the network performance is lower than a preset throughput threshold; selecting the path network matching mode when a network switching frequency in the network performance in the running state is higher than a preset switching frequency threshold; or selecting the path network matching mode when the running scenario is a preset running scenario. That is to say, different adjustment modes are triggered by different adjustment conditions. When the adjustment condition that the running state satisfies is detected, the corresponding adjustment mode is executed. A mapping relationship is established between the adjustment methods and current real-time demands. The current network performance, running scenario, and running speed are detected first, and then the corresponding adjustment mode is selected according to the acquired parameters of the running state. For example, when the network signal quality is unsatisfactory due to weak terminal device signals, uplink and downlink enhancement adjustment is performed. When the high-speed movement of the mobile tool carrying the terminal device causes signal instability, frequency offset compensation adjustment is performed. When the running of the mobile tool carrying the terminal device leads to a decrease in throughput and consequently a degrade in SRS performance, SRS movement estimation algorithm adjustment is performed. When the mobile tool carrying the terminal device runs to a special scenario, path matching adjustment is performed. It can be understood that if the running state satisfies multiple adjustment conditions at the same time, multiple adjustment modes may be invoked simultaneously in an unlimited order. Alternatively, the adjustment modes may be executed according to a priority order preset by the user. In addition, the correspondence between the running states and the adjustment modes means that the corresponding adjustment mode is preferentially adopted in a certain running state, but does not mean that only the corresponding adjustment mode can be adopted in the running state. When the communication mode of the terminal device cannot meet user's requirements by adopting the adjustment mode corresponding to the current running state, other adjustment modes may be adopted for improvement. For example, when the signal strength in the network performance is lower than the preset signal strength threshold, the uplink and downlink adjustment mode is preferentially adopted. However, if the communication mode of the terminal device cannot meet the user's requirements after the uplink and downlink adjustment mode is adopted, one or more of the other adjustment modes such as the frequency offset compensation mode, the SRS movement estimation mode, the path network matching mode, etc., may be adopted at random, or the other adjustment modes may be tried according to preset priorities or conditions, to make the communication mode of the terminal device meet the user's requirements.

In an example, a high-speed mode matching module is used to associate the current running state of the terminal device with the adjustment mode. For example, an invoking sequence is preset; or a percentage by which each parameter meeting the adjustment condition exceed a corresponding criterion is calculated, a priority order is determined according to the real-time percentages, and the corresponding adjustment modes are invoked according to the priority order.

In an example, an adaptive control module is used for coordinated control in a high-speed mode. The adaptive control module determines the corresponding adjustment condition according to the running scenario, network performance, and running speed of the terminal device currently detected, and triggers corresponding control adjustment for optimization, e.g., uplink and downlink enhancement adjustment, frequency offset compensation adjustment, SRS movement estimation algorithm adjustment, or path matching adjustment, to optimize the wireless communication performance of the terminal device in the high-speed movement mode. For the control adjustment, a single adjustment mode is invoked first, and if the problem cannot be solved using the single adjustment mode, other adjustment modes corresponding to other adjustment conditions are invoked. For example, a current uplink or downlink signal strength may be preferentially checked. If the signal strength is unsatisfactory, the uplink and downlink adjustment mode, i.e., the adjustment mode of enhancing the uplink/downlink signal strength, may be preferentially adopted. If the current signal strength is normal, but the signal is unstable due to the train (i.e., the environment in which the terminal device is located) is in a high-speed running state, the frequency offset compensation adjustment mode may be preferentially adopted. If the user is currently downloading with high throughput and cannot reach a preset throughput threshold, SRS movement estimation mode may be preferentially adopted for compensation adjustment. If the user is currently in a special road section, such as tunnel, bridge culvert, deep mountain, etc., the path matching adjustment mode may be preferentially invoked. If the above conditions coexist, a combination of adjustment modes may be adopted until a reasonable running state is reached.

In an example, a parameter storage module is used to store various parameters of the terminal device, including parameters of the acquired running state and parameters corresponding to the adjustment modes, e.g., different bandwidth, power, spectrum, interference, Resource Block (RB) resources, and slice parameters in a Carrier Aggregation (CA) mode, an SRS mode, a MIMO mode, an uplink and downlink antenna switching mode under LTE and NR. The CA mode is to combine a plurality of LTE or NR carrier signals to expand the bandwidth to improve the uplink and downlink throughput rates. In addition, the parameter storage module is also used to store adjustment parameters and driving codes of slices. The module may also be configured for storing peak uplink and downlink throughput under different slice configurations, and storing peak and average uplink and downlink rates reached by different application software. The throughput value required by the application software is refreshed in real time through a large amount of usage data, and a refreshing result is stored in the parameter storage module. Such an Artificial Intelligence (AI) learning algorithm allows for a more reasonable invocation of the adjustment modes.

At the operation103, the communication mode of the terminal device is adjusted according to the adjustment mode. That is to say, the parameters of the current terminal device are adjusted according to the selected adjustment mode corresponding to the adjustment condition, such that the running state of the terminal device reaches the user's requirement or an optimal state.

In an example, adjusting the communication mode of the terminal device according to the adjustment mode includes one or any combination of: adjusting a maximum power value and a minimum receive level value of the terminal device if the uplink and downlink adjustment mode is selected; acquiring a frequency offset value and performing compensation for the communication mode of the terminal device according to the frequency offset value if the frequency offset compensation mode is selected; scheduling an SRS resource configuration or a Precoding Matrix Indicator (PMI) resource configuration according to a channel strength in the network performance if the SRS running scenario mode is selected; or performing networking adjustment or cell handover compensation adjustment or performing path attenuation compensation adjustment according to the running scenario if the path network matching mode is selected. That is to say, the uplink and downlink adjustment mode is mainly for enhancing uplink and downlink signals of the terminal device, for example, by adjusting power values. The frequency offset compensation is mainly for calculating a frequency offset and adjusting received and transmitted signals. The SRS movement estimation mode is mainly for adjusting an SRS or PMI configuration mode. The path network matching mode is mainly for performing preset environment signal compensation according to the current environment.

In an example, the terminal device is in a moving state, e.g., is in a high-speed railway, and due to the blocking of the waiting hall, the impact of the carriage body, or the blocking of deep mountains or when the train is currently at the edge of a cell of a base station, the signal strength received by the terminal device may be very weak, and the terminal device cannot normally communicate with the base station or can communicate with the base station only with unsatisfactory communication quality. Because the signal strength is also affected by the carriage, the signal strength varies when the antenna is located outside the carriage (e.g., on the roof of the carriage) or inside the carriage. For example, a maximum RSRP of the terminal device is -60 dBm. When the train speed is lower than or higher than a reference train speed of 250 Km/h, the RSRP will decrease correspondingly, and the signal strength inside the train will be lower than that outside the train due to signal attenuation. In this case, the uplink and downlink adjustment mode, i.e., an operating mode of uplink enhancement and downlink enhancement, may be invoked. For example, the operating mode of uplink enhancement is as follows: on the basis of a default maximum transmit power Pmax=23, several operating modes such as Pmax+1, Pmax+2, Pmax+3, Pmax+4, and Pmax+n are set to increase the current maximum power limit of the terminal device and reduce Multi-Tone Power Ratio (MTPR) power reduction values in various modulation modes (Quadrature Phase Shift Keying (QPSK), 16QAM (Quadrature Amplitude Modulation), 64QAM and 256QAM), such that the maximum output power under high-order modulation is not reduced or is slightly reduced. The operating mode of downlink enhancement is as follows: on the basis of a default minimum receive level (e.g., RSRPmin=-125 dBm), to increase the current minimum receive level limit of the terminal device, several operating modes such as RSRPmin-1, RSRPmin-2, RSRPmin-2, RSRPmin-3, and RSRPmin-n are set, and an NR mimo mode, such as 2*2 mimo and 4*4 mimo, is forcibly enabled to improve the sensitivity of the terminal device to increase the minimum receive level range. In an example, whether to trigger uplink and downlink adjustment may also be determined according to a transmit power. For example, the current transmit power and received signal strength (RSSI or RSRP) of the terminal device are detected, and model signal parameters of a base station of a cell to which the terminal device is currently connected are read. If there is a match for the terminal device, an uplink and downlink adjustment is executed; otherwise, the uplink and downlink adjustment is not executed.

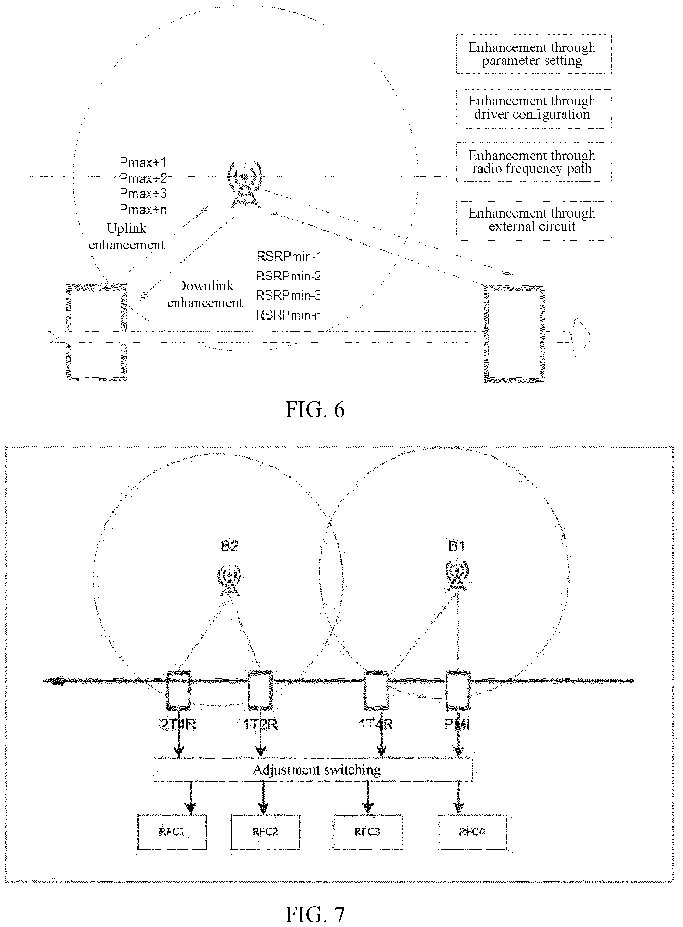

A system architecture of uplink and downlink adjustment is shown in FIG. 6. First part: enhancement through parameter limit setting. Pmax is increased by modifying a parameter configuration in the terminal device, e.g., Qualcomm NV items. Second part: enhancement through driver configuration. Pmax is increased by modifying a driver file in the terminal device, e.g., an Encrypting File System (EFS). Third part: enhancement through radio frequency circuit path. Pmax is increased by modifying a transmit or receive circuit path in the terminal device, e.g., preferentially selecting a path with lowest loss or selecting a bypass path. Fourth part: enhancement through external circuit. Pmax is increased by enabling an external Power Amplifier (PA) or Low Noise Amplifier (LNA) circuit or module in a high-pass mode.

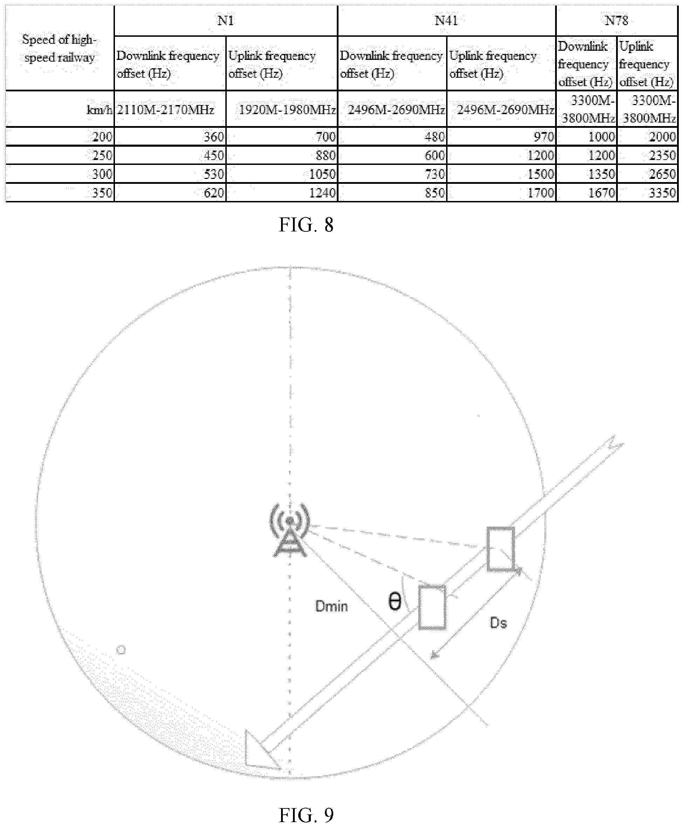

In an example, for the SRS movement estimation mode, the terminal device has an SRS and PMI signal reporting and feedback mechanism. During the high-speed running of the train, the frequent changes in the position of the terminal device relative to the base station has great impact on information fed back by an SRS, and precise uplink information reporting cannot be implemented. A signal strength of the terminal device is detected and compared with preset thresholds of different stages of an SRS, the strength of a field in which the terminal device is located is determined, and SRS mode control is performed. If the field is a medium-strength field, SRS reporting is performed. If the field is a weak field, PMI reporting is performed because the uplink signal is weak. In addition, the traveling direction and signal strength of the terminal device are predicted, to adjust the SRS operating mode to, e.g., PMI, 1T2R (one transmit antenna and two receive antennas), 1T4R (one transmit antenna and four receive antennas), 2T4R (two transmit antennas and four receive antennas), etc., as shown in FIG. 7. In FIG. 7, RFC is the abbreviation of Request For Comments, i.e., a series of memos and documents issued by the Internet Engineering Task Force, which collect information about the Internet. In an example, acquiring a frequency offset value and performing compensation for the communication mode of the terminal device according to the frequency offset value includes: calculating the frequency offset value according to the running speed and a Doppler shift formula; performing compensation for a received signal and a transmitted signal according to the frequency offset value; and adjusting a center frequency of an antenna of the terminal device according to the frequency offset value. During the high-speed running of the train, due to the Doppler effect, a frequency offset occurs after the terminal device receives a signal sent by a base station. A higher train speed indicates a larger frequency offset. For example, f_400km/h>f_350km/h>f_300km/h>f_250km/h>f_200km/h. A higher center frequency indicates a larger frequency offset, i.e., N79>N78>N41>N1>N3. The frequency offset leads to the deterioration of the performance of the terminal device. When the terminal device is close to the base station, the frequency offset is positive. When the terminal device is away from the base station, the frequency offset is negative. A commonly used correspondence between running speeds and frequency offset values may be as shown in FIG. 8. A formula for calculating the Doppler frequency offset of the terminal device is as follows: fp(f)=fc(v/c)cosθ(t), where fp represents the frequency offset value, fc represents the carrier frequency, V represents the speed of the terminal device, C represents the speed of light, θ represents the angle between the moving direction of the terminal device and the base station of the cell, and

$$\cos\theta(t) = \frac{D_s - vt}{\sqrt{D_{min}^2 + (D_s - vt)^2}} \quad (0 \leq t \leq 2Ds/v)$$

, where Ds represents the distance traveled by the terminal device, and for Ds, θ, and Dmin, reference may be made to FIG. 9. The current train speed and a channel number of a channel on which the terminal device operates are detected. Uplink and downlink spectrum values are calculated. Then, it is determined whether the current service is dominated by an uplink service or a downlink service, and frequency compensation is performed. For example, the terminal device adjusts a receive frequency of a receiver chip according to a frequency offset of an uplink signal transmitted by the base station, to cancel an uplink Doppler frequency offset caused by high-speed traveling.

For example, the frequency offset compensation mode may be implemented through four operations. In a first operation, the current train speed, i.e., the moving speed of the terminal device, is detected. In a second operation, the angle between the traveling direction of the train and the base station is calculated according to the detected current train speed. In a third operation, a current frequency offset value of the received signal is calculated according to the Doppler shift formula. In a fourth operation, the Doppler frequency offset value is added to the receive frequency of the terminal device to compensate for and cancel the frequency offset value of the signal received by the terminal device. A preprocessing frequency offset compensation algorithm is applied to the signal transmitted by the terminal device (i.e., is also compensated according to the frequency offset value), such that the wireless signal has a correct frequency when reaching the base station. In addition, the terminal device may also tune a center frequency of an antenna to the frequency offset value through an antenna tuning chip to enhance the detected received signal value. The terminal device obtains the frequency offset value through calculation or according to a preset relationship between speeds and frequency offsets, performs adaptive frequency processing, acquires a frequency offset of an initial access, and coarsely adjusts the frequency offset based on a non-volatile (NV) parameter. Then, the frequency offset value is acquired in real time, Clock Oscillators (XO) clock parameters C1, C2, and C3 are finely adjusted, and the frequency of the terminal device is adjusted, such that the frequency of the terminal device and the frequency of the base station are kept within a certain threshold range, and the terminal device can implement modulation and demodulation. The adjustment is based on the acquisition of a self-receiving frequency error parameter, the acquisition of an Error Vector Magnitude (EVM) of channel quality, and the acquisition of a Block Error Rate (BLER) by the terminal device, until the demodulation can be normally performed, the frequency error is within a standard deviation, and the EVM is within a threshold range corresponding to the modulation mode.

In addition, center frequency and reference frequency values may be changed by switching the types of XO and Temperature Compensated Crystal Oscillator (TCXO), the center and peripheral capacitance values, to implement frequency adjustment control. Network synchronization between the terminal device and the base station can be implemented by adjusting a local oscillator frequency of the terminal device to be consistent with the carrier frequency of the cell of the base station. That is to say, real-time, fast, and accurate adaptive frequency adjustment is realized through frequency offset estimation and frequency offset compensation, until the terminal device can normally register with a network and perform demodulation.

In an example, performing networking adjustment or cell handover compensation adjustment or performing path attenuation compensation adjustment according to the running scenario includes: monitoring a networking signal and implementing advance networking mode switching through attenuation pre-calculation when a networking mode switching frequency in the network switching is higher than a first switching threshold; detecting signal quality of cells, determining a priority order of the cells in a descending order of the signal quality of the cells, and connecting to the cells according to the priority order when a cell handover frequency in the network switching is higher than a second switching threshold; and performing, by the terminal device, adaptive signal adjustment according to a preset path when the running scenario is a preset running scenario. That is to say, different running scenarios correspond to different processing manners. In path network matching, "path" can be understood as a traveling path of the mobile tool (e.g., high-speed railway) carrying the terminal device, and base stations are arranged along the traveling path of the train, and "network" can be understood as an existing communication network (e.g., 5G communication network), including an NSA network, an SA network, and an LTE network. The path network matching may include the following parts.

First part: adaptive switching adjustment among NSA/SA/LTE. To be specific, a networking signal is monitored and advance networking mode switching is implemented through attenuation pre-calculation when a networking mode switching frequency in the network switching is higher than a first switching threshold. The network control and switching are realized through network signal detection and attenuation pre-calculation. For example, the terminal device monitors LTE and NR signal strengths in real time, switches the mode of the terminal device from NSA to SA before an LTE anchor signal weakens or is about to be lost, and switches to an LTE mode or other network modes in advance if the NR signal is lower than a preset NR threshold, so as to ensure the continuity of NSA/SA/LTE signals and prevent the problems of registration connection failure and network disconnection caused by frequent cell slicing. For example, LTE anchor signals are classified into M1, M2, M3, M4, M5, and M6 levels, respectively corresponding to -50 dBm, -60 dBm, -70 dBm, -80 dBm, -90 dBm, and -100 dBm, and a signal attenuation amount per unit distance is defined as S. A current service requirement of the terminal device is detected by detecting current LTE and NR signals of the terminal device. The service requirement includes a throughput requirement and a call service requirement. According to the service requirement, it is determined whether the LTE, NSA or SA mode is currently required. For example, in the current NSA mode, an LTE anchor signal strength of -80 dBm or above is required, and an NR signal strength of -85 dBm or above is required. It is detected that the current LTE signal strength of the terminal device is -75 dBm and the current NR signal strength of the terminal device is -80 dBm. In a next sampling slot, the terminal device moves forward 500 m. Because the terminal device becomes farther away from the LTE base station, the calculated LTE signal strength decreases by 5 dBm. Considering a certain threshold margin of, for example, 3 dBm, an estimated maximum signal strength value of the terminal device in the next slot on LTE is -83 dBm, which is lower than the LTE anchor access threshold requirement. Consequently, the terminal device goes offline due to the current weak LTE anchor signal. In this case, the terminal device may be switched to enter the SA mode one slot ahead, to ensure the continuity of network signals received by the terminal device. The switching control is implemented by forcibly modifying a network configuration through a software interface of the terminal device.

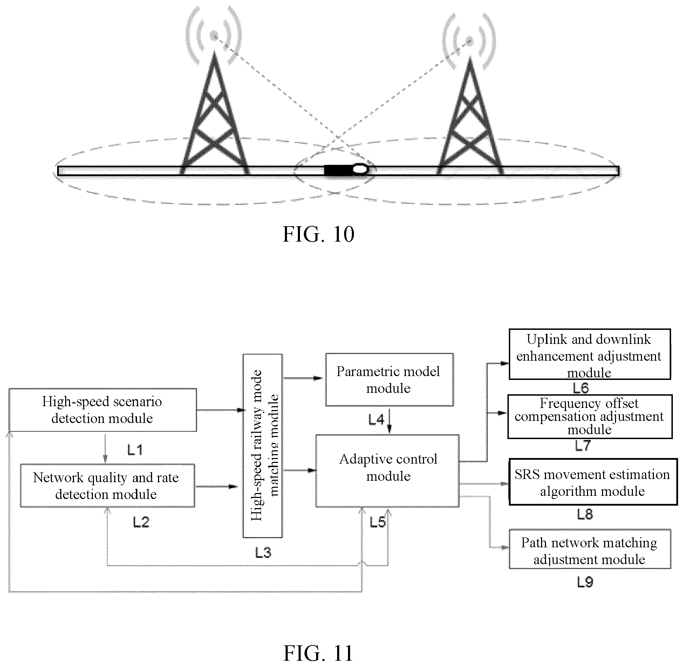

Second part: NR cell handover compensation adjustment. To be specific, the terminal device detects signal quality of cells, determines a priority order of the cells in a descending order of the signal quality of the cells, and connects to the cells according to the priority order when a cell handover frequency in the network switching is higher than the second switching threshold. In some embodiments, when the train is at an edge of two cells as shown in FIG. 10, the train is in the middle, and base stations of two cells are on the left and right. As shown in the figure, the train is located at an intersection of edges of the base stations of the two cells, and the signal strength received by the terminal device will be very weak or the terminal device is repeatedly handed over between the two cells, i.e., the terminal device sometimes connects to cell A and sometimes connects cell B. In this case, according to the current adjustment mode, uplink and downlink throughput levels and signal quality of the two cells are detected first, to determine which cell has a higher priority. The signal quality detection may include the acquisition and detection of the parameters in the above operation of 101. The terminal device preferentially registers with and connects to the cell with higher network quality. In addition, if it is detected that the terminal device is near the edge of the cell, the terminal device enables an auxiliary enhancement adjustment function to increase the current transmit power and receiving sensitivity of the terminal device, to achieve normal network connection and communication.

Third part: wireless signal path attenuation compensation adjustment on the terminal device side. To be specific, adaptive adjustment is performed according to a signal attenuation corresponding to a preset running scenario when the running scenario is the preset running scenario. For example, wireless signal attenuation compensation adjustment is performed according to the place where the mobile tool carrying the terminal device is located. The mobile tool may travel through mountains, rivers, tunnels, deep valleys, jungles, elevated roads, stations, suburbs, villages, plains, urban areas, etc. Different obstacles in these running scenarios have emission, scattering, refraction, and attenuation effects on the wireless signal between the terminal device and the base station. Therefore, an attenuation parameter or mode generated in the preset running scenario is preset, such that the terminal device can perform adaptive adjustment according to the preset running scenario.

In addition, in some embodiments, acquiring a running state of the terminal device includes: periodically acquiring the running state of the terminal device according to a preset time interval, and executing the corresponding adjustment mode. When the preset time interval is short enough, i.e., the running state of the terminal device is detected and correspondingly adjusted in real time, it can be ensured that the network performance of the terminal device always meets the user's requirements, thereby improving user experience. It can be understood that if it is detected that the running state of the terminal device is normal, i.e., all parameters are within reasonable threshold ranges (which can provide optimal network performance of the terminal device) after the running state of the terminal device is acquired, no adjustment needs to be performed. That is to say, if parameters acquired by feedback after adjustment are not within the reasonable threshold ranges, it indicates that another round of adjustment needs to be performed, until the parameters meet the threshold requirements.

In some embodiments, the terminal device moves at a high speed (e.g., the terminal device is located in a mobile tool such as a high-speed railway), and factors including frequent cell handover and attenuation, refraction, and reflection of 5G signals inside and outside the carriage have various impact on the communication performance of the terminal device in static and moving states, leading to problems such as intermittent signals, inability to find a network, frequent call dropping, low uplink and downlink throughput, low call completion rate, and call jamming. Firstly, because the mobile tool carrying the terminal device moves at high speed, a Doppler effect occurs in the communication of the terminal device. The Doppler effect leads to a frequency offset, which results in demodulation failure or demodulation performance deterioration of the terminal device, affecting the uplink and downlink communication quality. That is to say, the distance between the mobile terminal device and the base station changes rapidly, resulting in a certain frequency difference between the final receive frequency and the center frequency. When the distance between the terminal device and the base station is reduced, the frequency increases and the frequency offset decreases. When the distance between the terminal device and the base station is increased, the frequency decreases and the frequency offset increases. A faster moving speed of the terminal device indicates a larger frequency offset. A higher frequency leads to a larger frequency offset. When the train speed reaches 200 Km/h or more, the frequency offset caused by the Doppler effect is already very large. Using N78 as an example, when the train speed is 350 Km/h, the uplink frequency offset is 3 KHz or more, and the downlink frequency offset is 16 KHz or more. Secondly, frequent cell handover during the running of the mobile tool carrying the terminal device leads to network disconnection, call drop, and unstable throughput in the communication of the terminal device. Due to a limited number of base stations distributed and a limited coverage provided by different base stations, China's three major telecom operators China Mobile, China Unicom, and China Telecom currently deploy 5G base stations at specified intervals. For example, for N78/N41 and other highfrequency bands, the interval is about 450 m in dense cities, 700 m in urban areas, 1.3 Km in suburbs, and 1.5 Km-2 Km in villages. As the frequency increases, the coverage of base stations slightly increases, for example, by 4-5 Km. Therefore, when a mobile tool carrying a 5G terminal device moves rapidly, the 5G terminal device often moves through multiple base stations of cells in a few seconds or tens of seconds, i.e., is frequently handed over between cells and often operates at the cell edge. Frequent handover of the terminal device between cells and frequent operation of the terminal device at the cell edge with weak signal strength lead to problems such as high probability of 5G network disconnection, difficulty in network access, and unstable signals, affecting user experience of 5G. Thirdly, during the communication between the base station and the train, the strengths of wireless cellular signals change with the train and the surrounding environment. The fluctuation of wireless signals leads to deterioration of 5G communication quality. That is to say, in the process of traveling, obstacles such as mountains, rivers, deep valleys, trees, high buildings, the metal frame of the carriage, glass windows, sliding door compartments, etc., cause a certain degree of reflection, refraction, and attenuation of 5G signals. Due to the complex environment where the terminal device is located, such as crowded people, mobility, shielding, and blocking during the running of the mobile tool carrying the terminal device, the different angles and speeds of multiple NR MIMO antennas on the terminal device relative to an antenna of the base station change differently, greatly affecting the transmitting and receiving performance in different scenarios, and affecting the throughput performance and call quality. Finally, when the mobile tool is running at a high speed, e.g., when the current speed is about 350 Km/h-500 Km/h, the position of the terminal device relative to the base station is changing rapidly, leading to a longer distance and delay. In this case, an adjustment system shown in FIG. 11 may be built according to the method proposed in this embodiment. A high-speed scenario detection module L1 is configured for detecting the current running scenario of the terminal device. A network quality and rate detection module L2 is configured for detecting the current running speed and network performance of the terminal device. A high-speed mode matching module L3 is configured for detecting the adjustment mode corresponding to the adjustment condition that the current running state (including the running speed, the running scenario, and the network quality) satisfies. A parameter model module L4 is configured for storing parameter information acquired or involved in the current operation. An adaptive control module L5 is configured for invoking the corresponding adjustment mode according to processing results from the modules L3 and L4. An uplink and downlink enhancement module L6 is configured for executing the uplink and downlink adjustment mode. A frequency offset compensation adjustment module L7 is configured for executing the frequency offset compensation mode. An SRS movement estimation algorithm module L8 is configured for executing the SRS movement estimation mode. A path network matching adjustment module L9 is configured for executing the path network matching mode.

In this embodiment, a high-speed running scenario can be acquired, and an auxiliary identification function is used to identify the running scenario as an intra-station, station exit, intra-carriage, or out-of-carriage scenario, to solve the problems of weak GPS signals and inability to identify intra-vehicle scenarios in the high-speed moving state. For the high-speed mode, the uplink and downlink enhancement modes are adopted to enhance the signal strength, solve the problem of weak coverage, and prevent the disconnection of the terminal device during movement. An algorithm of estimating SRS high-speed movement, an algorithm of matching the train speed with the antenna, the method of path link matching for the terminal device, the algorithm of detecting and enhancing the performance of the terminal device at the cell edge, and the like are used to solve the related problems. Switching between the NSA and SA modes can also be implemented to solve the problem of unstable LTE anchors. Finally, it can be quickly identified whether the user is in a high-speed scenario, inside the carriage, outside the carriage, in the waiting hall, or at the station exit, and the identification does not rely on GPS positioning, thereby preventing the problem of imprecise indoor GPS positioning. The current rate of the terminal device can be quickly identified, to determine whether the terminal device is in the static state or moving state. The communication quality problem caused by weak signals in the high-speed scenario can be solved. The frequency offset problem during the rapid movement of the mobile tool carrying the terminal device can be solved. The problems of unsatisfactory terminal device performance and SRS adjustment failure caused by the rapid movement of the mobile tool carrying the terminal device in the high-speed movement scenario can be solved. The problems of blocking and interference by obstacles during high-speed movement can be solved. The problems of frequent cell handover and large fluctuations of signals of the terminal device at the cell edge in the process of high-speed movement can be solved. The difficulty in the selection of network standards in the process of high-speed movement can be solved, and slicing in NSA or SA can be preferentially selected based on a certain algorithm. The problem of limited network throughput in the case of high traffic in the high-speed movement scenario can be solved.

In this embodiment, a method for adjusting a communication mode of a terminal device is provided. N adjustment modes corresponding to different adjustment conditions are preset, and N is an integer not less than 2. A running state of the terminal device is acquired, an adjustment condition that the running state of the terminal device satisfies is identified, the adjustment mode matching the adjustment condition is determined, and the communication mode of the terminal device is adjusted according to the determined adjustment mode. The matching adjustment mode is invoked to actively improve the communication function of the terminal device in different running scenarios, at different running speeds, and under different network performance, thereby improving the communication quality of the terminal device to improve user experience.

It should be understood that the division of the operations of the above methods is only for the sake of clear description, and in practical applications, the operations may be combined into one operation, or some operations may be divided into multiple operations. Such combination or division falls within the scope of protection of the present disclosure as long as the same logical relationship is included. Any insignificant modification made to or any insignificant design introduced in an algorithm or process without changing the core design of the algorithm and process shall fall within the scope of protection of the present disclosure.

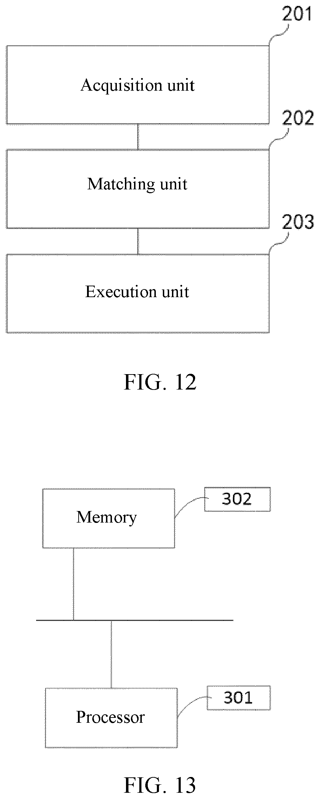

An embodiment of the present disclosure relates to an apparatus for adjusting a communication mode of a terminal device. As shown in FIG. 12, the apparatus includes:

an acquisition unit 201, configured for acquiring a running state of the terminal device, where the running state includes one or any combination of a running scenario, network performance, or a running speed;

a matching unit 202, configured for determining an adjustment mode matching the running state, where N adjustment modes corresponding to different running states are preset, and N is an integer greater than 1; and

an execution unit 203, configured for adjusting the communication mode of the terminal device according to the adjustment mode.

For the acquisition unit 201, in an example, when the running state includes the running scenario, acquiring a running state of the terminal device includes one or any combination of: acquiring location information of the terminal device according to a base station of a cell and GPS, and acquiring the running scenario of the terminal device according to the location information; acquiring an environmental feature parameter using a camera of the terminal device, and acquiring the running scenario of the terminal device according to the environmental feature parameter; and detecting a radiation characteristic of a surrounding environment of the terminal device through an electromagnetic wave, and acquiring the running scenario of the terminal device according to the radiation characteristic, where the radiation characteristic includes direct irradiance, reflection, scattering, and/or diffraction characteristics.

In an example, when the running state includes the running speed, acquiring a running state of the terminal device includes one or any combination of: acquiring the running speed of the terminal device according to a positioning distance acquired by a GPS and a positioning time difference corresponding to the positioning distance; or acquiring the running speed of the terminal device according to an SRS feedback time difference and an angle difference corresponding to the SRS feedback time difference.

In an example, acquiring a running state of the terminal device includes: periodically acquiring the running state of the terminal device according to a preset time interval.

For the matching unit 202, in an example, the adjustment mode includes one or any combination of: an uplink and downlink adjustment mode, a frequency offset compensation mode, a SRS movement estimation mode, or a path network matching mode.

In an example, determining an adjustment mode matching the running state includes one or any combination of: selecting the uplink and downlink adjustment mode when a signal strength in the network performance in the running state is lower than a preset signal strength threshold; selecting the frequency offset compensation mode when the running speed in the running state is higher than a preset speed; selecting the SRS movement estimation mode when a throughput in the network performance is lower than a preset throughput threshold; selecting the path network matching mode when a network switching frequency in the network performance in the running state is higher than a preset switching frequency threshold; or selecting the path network matching mode when the running scenario is a preset running scenario.

For the execution unit 203, in an example, adjusting the communication mode of the terminal device according to the adjustment mode includes one or any combination of: adjusting a maximum power value and a minimum receive level value of the terminal device is the uplink and downlink adjustment mode is selected; acquiring a frequency offset value and performing compensation for the communication mode of the terminal device according to the frequency offset value if the frequency offset compensation mode is selected; scheduling an SRS resource configuration or a PMI resource configuration according to a channel strength in the network performance if the SRS running scenario mode is selected; or performing networking adjustment or cell handover compensation adjustment or performing path attenuation compensation adjustment according to the running scenario if the path network matching mode is selected.

In an example, acquiring a frequency offset value and performing compensation for the communication mode of the terminal device according to the frequency offset value includes: calculating the frequency offset value according to the running speed and a Doppler shift formula; performing compensation for a received signal and a transmitted signal according to the frequency offset value; and adjusting a center frequency of an antenna of the terminal device according to the frequency offset value.

In an example, performing networking adjustment or cell handover compensation adjustment or performing path attenuation compensation adjustment according to the running scenario includes: monitoring a networking signal and implementing advance networking mode switching through attenuation pre-calculation when a networking mode switching frequency in the network switching is higher than a first switching threshold; detecting signal quality of cells, determining a priority order of the cells in descending order of the signal quality of the cells, and connecting to the cells according to the priority order when a cell handover frequency in the network switching is higher than the second switching threshold; and performing adaptive adjustment according to a signal attenuation corresponding to a preset running scenario when the running scenario is the preset running scenario.

It can be seen that this embodiment is a system embodiment corresponding to the foregoing method embodiments, and this embodiment may be implemented in combination with the foregoing method embodiments. The related technical details mentioned in the foregoing embodiments are still valid in this embodiment, and the details will not be repeated here in order to reduce repetition. Correspondingly, the related technical details mentioned in this embodiment also apply to the above embodiments.

It is to be noted that each module involved in this embodiment is a logic module. In practical applications, a logic unit may be a physical unit or a part of a physical unit, or may be implemented by a combination of a plurality of physical units. In addition, in order to highlight the innovative part of the present disclosure, units that are not closely related to the technical problem to be solved in the present disclosure are not introduced in this embodiment, but this does not mean that there are no other units in this embodiment.

Another embodiment of the present disclosure relates to a terminal device. As shown in FIG. 13, the terminal device includes at least one processor 301 and a memory 302 communicatively connected to the at least one processor 301. The memory stores an instruction executable by the at least one processor which, when executed by the at least one processor, causes the at least one processor to implement the method for adjusting a communication mode of a terminal device.

The memory and the processor are connected by a bus. The bus may include any number of interconnected buses and bridges. The bus connects various circuits of one or more processors and the memory together. The bus may also connect together a peripheral device, a voltage regulator, a power management circuit, and other circuits, which are well known in the art and therefore will not be detailed herein. A bus interface provides an interface between the bus and a transceiver. The transceiver may be one element or a plurality of elements, for example, a plurality of receivers and transmitters, and provides a unit for communicating with various other apparatus over a transmission medium. Data processed by the processor is transmitted over a wireless medium through an antenna. The antenna further receives data and transmits the data to the processor.

The processor is responsible for managing the bus and general processing and may also provide various functions including timing, peripheral interfaces, voltage regulation, power management and other control functions. The memory may be configured for storing data used by the processor in performing operations.

An embodiment of the present disclosure relates to a computer-readable storage medium, storing a computer program which, when executed by a processor, causes the processor to implement the foregoing method embodiments.

It may be understood by those having ordinary skills in the art that all or some of the operations of the methods in the above embodiments may be performed by a program instructing related hardware. The program is stored in a storage medium, and includes several instructions to cause a device (which may be a single chip microcomputer, a chip, etc.) or a processor to perform all or some of the operations of the methods described in the embodiments of the present disclosure. The foregoing storage medium includes any medium that can store program code, such as a Universal Serial Bus (USB) flash drive, a removable hard disk, a Read-Only Memory (ROM), a Random Access Memory (RAM), a magnetic disk, or an optical disk.

It may be understood by those having ordinary skills in the art that the foregoing embodiments are specific embodiments for practicing the present disclosure and that in practical applications, various changes in form and details may be made without departing from the essence and scope of the present disclosure.

## Claims

1. A method for adjusting a communication mode of a terminal device, comprising:

   acquiring a running state of the terminal device, wherein the running state comprises one or any combination of a running scenario, network performance, or a running speed;
   determining an adjustment mode matching the running state, wherein N adjustment modes corresponding to different running states are preset, and N is an integer greater than 1; and
   adjusting the communication mode of the terminal device according to the adjustment mode.

2. The method of claim 1, wherein the adjustment mode comprises one or any combination of:
   an uplink and downlink adjustment mode, a frequency offset compensation mode, a Sounding Reference Signal (SRS) movement estimation mode, or a path network matching mode.

3. The method of claim 2, wherein determining an adjustment mode matching the running state comprises one or any combination of:

   selecting the uplink and downlink adjustment mode in response to a signal strength in the network performance being lower than a preset signal strength threshold;
   selecting the frequency offset compensation mode in response to the running speed being higher than a preset speed;
   selecting the SRS movement estimation mode in response to a throughput in the network performance being lower than a preset throughput threshold;
   selecting the path network matching mode in response to a network switching frequency in the network performance being higher than a preset switching frequency threshold; or
   selecting the path network matching mode in response to the running scenario being a preset running scenario.

4. The method of claim 2, wherein adjusting the communication mode of the terminal device according to the adjustment mode comprises one or any combination of:

   adjusting a maximum power value and a minimum receive level value of the terminal device in response to selecting the uplink and downlink adjustment mode;

acquiring a frequency offset value and performing compensation for the communication mode of the terminal device according to the frequency offset value, in response to selecting the frequency offset compensation mode;

scheduling an SRS resource configuration or a Precoding Matrix Indicator (PMI) resource configuration according to a channel strength in the network performance, in response to selecting the SRS running scenario mode; or

performing networking adjustment or cell handover compensation adjustment or performing path attenuation compensation adjustment according to the running scenario, in response to selecting the path network matching mode.

5. The method of claim 4, wherein acquiring a frequency offset value and performing compensation for the communication mode of the terminal device according to the frequency offset value comprises:

calculating the frequency offset value according to the running speed and a Doppler shift formula;

performing compensation for a received signal and a transmitted signal according to the frequency offset value; and

adjusting a center frequency of an antenna of the terminal device according to the frequency offset value.

6. The method of claim 4, wherein performing networking adjustment or cell handover compensation adjustment or performing path attenuation compensation adjustment according to the running scenario comprises:

monitoring a networking signal and implementing advance networking mode switching through attenuation pre-calculation, in response to a networking mode switching frequency in the network switching being higher than a first switching threshold;

detecting signal quality of cells, determining a priority order of the cells in a descending order of the signal quality of the cells, and connecting to the cells according to the priority order, in response to a cell handover frequency in the network switching being higher than the second switching threshold; and

performing adaptive adjustment according to a signal attenuation corresponding to a preset running scenario, in response to the running scenario being the preset running scenario.

7. The method of claim 1, wherein acquiring a running state of the terminal device comprises:

periodically acquiring the running state of the terminal device according to a preset time interval.

8. The method of claim 1, wherein in response to the running state comprising the running scenario, acquiring a running state of the terminal device comprises one or any combination of:

acquiring location information of the terminal device according to a base station of a cell and a Global Positioning System (GPS), and acquiring the running scenario of the terminal device according to the location information;

acquiring an environmental feature parameter using a camera of the terminal device, and acquiring the running scenario of the terminal device according to the environmental feature parameter; or

detecting a radiation characteristic of a surrounding environment of the terminal device through an electromagnetic wave, and acquiring the running scenario of the terminal device according to the radiation characteristic, wherein the radiation characteristic comprises direct irradiance, reflection, scattering, and/or diffraction characteristics.

9. The method of claim 1, wherein in response to the running state comprising the running speed, acquiring a running state of the terminal device comprises one or any combination of:

acquiring the running speed of the terminal device according to a positioning distance acquired by a GPS and a positioning time difference corresponding to the positioning distance; or

acquiring the running speed of the terminal device according to an SRS feedback time difference and an angle difference corresponding to the SRS feedback time difference.

10. An apparatus for adjusting a communication mode of a terminal device, comprising:

an acquisition unit, configured for acquiring a running state of the terminal device, wherein the running state comprises one or any combination of a running scenario, network performance, or a running speed;

a matching unit, configured for determining an adjustment mode matching the running state, wherein N adjustment modes corresponding to different running states are preset, and N is an integer greater than 1; and

an execution unit, configured for adjusting the communication mode of the terminal device according to the adjustment mode.

**EP 4 408 073 A1**

11. A terminal device, comprising:

   at least one processor; and
   a memory communicatively connected to the at least one processor, wherein:
   the memory stores an instruction executable by the at least one processor which, when executed by the at least one processor, causes the at least one processor to perform the method of any of claims 1 to 9.

12. A computer-readable storage medium, storing a computer program which, when executed by a processor, causes the processor to perform the method of any of claims 1 to 9.

101

Acquire a running state of the terminal device, where the running state includes one or any combination of a running scenario, network performance, or a running speed

102

Determine an adjustment mode matching the running state, where N adjustment modes corresponding to different running states are preset, and N is an integer greater than 1

103

Adjust the communication mode of the terminal according to the adjustment mode

FIG. 1

Positioning by a
base station of a
cell

GPS positioning

Image

Video

Sound

Communication
short message

Acquisition of
feature parameters
in high-speed
railway scenario

Acquisition of 5G
electromagnetic
waves in high-speed
railway scenario

Attenuation
coefficient

Refraction
coefficient

Reflection
coefficient

Scattering
coefficient

FIG. 2

NR MIMO

Uplink transmit
power

BLER

DL Throughput

UL Throughput

SRS value

Wireless
performance
detection

RSRP

RSSI

SNR

MIMO RANK

MCS

TRX

DRX

PRXMIMO

DRXMIMO

FIG. 3

FIG. 4

FIG. 5

FIG. 6

FIG. 7

| Speed of high-speed railway | N1 | | N41 | | N78 | |
|---|---|---|---|---|---|---|
| | Downlink frequency offset (Hz) | Uplink frequency offset (Hz) | Downlink frequency offset (Hz) | Uplink frequency offset (Hz) | Downlink frequency offset (Hz) | Uplink frequency offset (Hz) |
| km/h | 2110M-2170MHz | 1920M-1980MHz | 2496M-2690MHz | 2496M-2690MHz | 3300M-3800MHz | 3300M-3800MHz |
| 200 | 360 | 700 | 480 | 970 | 1000 | 2000 |
| 250 | 450 | 880 | 600 | 1200 | 1200 | 2350 |
| 300 | 530 | 1050 | 730 | 1500 | 1350 | 2650 |
| 350 | 620 | 1240 | 850 | 1700 | 1670 | 3350 |

FIG. 8

FIG. 9

FIG. 10

FIG. 11

201

Acquisition unit

202

Matching unit

203

Execution unit

FIG. 12

302

Memory

301

Processor

FIG. 13

## INTERNATIONAL SEARCH REPORT

| International application No. |
|---|
| **PCT/CN2022/108332** |

**A.    CLASSIFICATION OF SUBJECT MATTER**

H04W 36/24(2009.01)i;  H04W 28/00(2009.01)i;  H04W 64/00(2009.01)i

According to International Patent Classification (IPC) or to both national classification and IPC

**B.    FIELDS SEARCHED**

Minimum documentation searched (classification system followed by classification symbols)

H04W36/-,  H04W28/-,  H04W64/-

Documentation searched other than minimum documentation to the extent that such documents are included in the fields searched

Electronic data base consulted during the international search (name of data base and, where practicable, search terms used)

CNABS, CNTXT, CNKI: 速度, 高速, 场景, 环境, 性能, 网络, 信号, 强度, 质量, RSRP, RSSI, 切换, 吞吐, 调整, 调节, 变更, 改变, 设置, 方法, 方式, 匹配, 对应, 相应, 映射, 预设, 预定, 模式, 参数, 频偏, 补偿; VEN, ENTXT, 3gpp, IEEE: speed, velocity, high, scen+, performance, RSRP, RSSI, handover, throughput, adjust+, chang+, modif+, set+, match+, correspond+, map+, preset, predetermine+, schedule+, mode, parameter, frequency offset, FO, compensate+.

**C.    DOCUMENTS CONSIDERED TO BE RELEVANT**

| Category* | Citation of document, with indication, where appropriate, of the relevant passages | Relevant to claim No. |
|---|---|---|
| X | CN 107925903 A (HUAWEI TECHNOLOGIES CO., LTD.) 17 April 2018 (2018-04-17) description, paragraphs [0106], [0142], [0253] and [0268]-[0288], and figures 11-12 | 1-12 |
| X | US 2020374079 A1 (CHERVYAKOV, Andrey et al.) 26 November 2020 (2020-11-26) description, paragraphs [0105]-[0186] | 1-12 |
| X | JP 2010050890 A (NEC CORP.) 04 March 2010 (2010-03-04) description, paragraphs [0034]-[0041], and figure 2 | 1, 7, 10-12 |
| A | CN 110048975 A (ZTE CORP.) 23 July 2019 (2019-07-23) entire document | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2022** | **01 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div style="text-align:center">

**INTERNATIONAL SEARCH REPORT**
Information on patent family members

</div>

| | | | International application No. |
|---|---|---|---|
| | | | **PCT/CN2022/108332** |

| Patent document cited in search report | | | Publication date (day/month/year) | Patent family member(s) | | | Publication date (day/month/year) |
|---|---|---|---|---|---|---|---|
| CN | 107925903 | A | 17 April 2018 | US | 2020112893 | A1 | 09 April 2020 |
| | | | | US | 2018167856 | A1 | 14 June 2018 |
| | | | | WO | 2017024591 | A1 | 16 February 2017 |
| | | | | JP | 2018523426 | A | 16 August 2018 |
| | | | | EP | 3324674 | A1 | 23 May 2018 |
| | | | | CN | 111328090 | A | 23 June 2020 |
| | | | | EP | 3927069 | A1 | 22 December 2021 |
| | | | | IN | 201847005597 | A | 23 February 2018 |
| | | | | EP | 3324674 | A4 | 25 July 2018 |
| | | | | EP | 3324674 | B1 | 02 June 2021 |
| | | | | ID | 201808144 | A | 03 August 2018 |
| | | | | JP | 2018523426 | W | 03 August 2018 |
| | | | | US | 10524174 | B2 | 31 December 2019 |
| | | | | CN | 111328090 | B | 21 February 2020 |
| | | | | JP | 6653376 | B2 | 26 February 2020 |
| | | | | US | 10716041 | B2 | 14 July 2020 |
| | | | | CN | 111328090 | B | 26 October 2021 |
| | | | | EP | 3927069 | A4 | 22 December 2021 |
| US | 2020374079 | A1 | 26 November 2020 | None | | | |
| JP | 2010050890 | A | 04 March 2010 | None | | | |
| CN | 110048975 | A | 23 July 2019 | WO | 2019137393 | A1 | 18 July 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111154844